# EUROPEAN PATENT APPLICATION

(11) **EP 1 818 316 A1**
(43) Date of publication of application: **15.08.2007**
(21) Application number: 07102144.8
(22) Date of filing: 12.02.2007
(51) Int. Cl.: C03C 1/00

(54) **Method for producing artificial sand for the ceramic and glassmaking industry from cullet obtained from separated glass collection**

(30) Priority: 13.02.2006 IT TO20060099
(71) Applicant: SASIL S.p.A., 13862 Brusnengo (Biella) (IT)
(72) Inventor: Ramon, Lodovico, I-13862 Brusnengo (Biella) (IT)
(74) Representative: Vanzini, Christian

(57) **Abstract**

A description is given of a method for producing artificial sand for the ceramic and glassmaking industry from a rejected fraction of the cullet obtained by the separated collection of glass, in which this rejected fraction is separated from the cullet by automated separation (50') based on optical transparency properties. The method comprises the stages of: subjecting one of the said cullet and rejected fraction of the cullet to washing with water (10'; 10), respectively upstream or downstream of the said automated separation based on optical transparency properties; subjecting the rejected fraction of the cullet treated in this way to grinding (20'; 20), in such a way as to produce a ground product; and subjecting the ground product to screening (30'; 30), in such a way as to separate a fine fraction of the ground product having a particle size of less than 1.2 mm. The artificial sand is composed of this fine fraction of the ground product.

## Description

The present invention relates in general to the field of technologies for recovering cullet obtained by separated glass collection.

As is known, this cullet is partially recycled for the production of hollow glassware, particularly bottles.

One of the problems which the hollow glassware industry has to resolve in order to reduce the energy consumption per litre of packaged product, which is much higher for "disposable glassware", is clearly the problem of reducing the weight/capacity ratio of the bottles to be produced, without compromising their mechanical strength.

The problem remains unsolved, although interesting results have been yielded by the development and optimization of the press and blow forming process.

Recently, the hollow glassware industry has invested considerable amounts in a research programme with the objective of eliminating the internal surface defects present in bottles made by the press and blow process, which for evident reasons decrease their resistance to tensile stresses on the internal surface, while also progressively reducing the weight of containers.

This research has included, for example, the development of the "Case Gob" method, designed to add a uniform layer of compressive stress to the outer surface of the finished bottles, by supplying the forming machines with drops coated with a layer of glass characterized by a high coefficient of expansion and produced continuously in a second small furnace. During cooling, the outer glass contracts farther than the inner glass, thus generating the desired compressive stresses.

Another method is the ionic exchange process, which has the same aim as the preceding method, but achieves this by replacing the sodium ions on the outer surface of the container with potassium ions which are characterized by a higher ionic radius, and therefore generate the said compressive stresses.

Various processes for coating the outer surface of bottles with synthetic resins, mainly polyurethane, have been developed and tested in both industrial and commercial settings. This coating protects the bottles from abrasion and also significantly increases their mechanical strength.

All the processes described briefly above have produced acceptable improvements, but have not been successfully applied in the industry, since, in the first two cases, the investment and operating costs were too high by comparison with the benefits which can be obtained and the too highly advanced technologies complicated the production process excessively, while, in the third case, the introduction of a significant percentage of organic substances created and continues to create problems of recycling the cullet, owing to the highly reducing action of these substances.

The main obstacle to achieving reductions in the average weight of containers in recent years has been the progressive deterioration of the quality of glass produced in industrial furnaces, which in turn is due to the need to increase the proportion of "furnace ready" cullet in the mixtures supplied to the furnaces.

This is because the inadequate quality of "furnace ready" cullet, due primarily to the excessive concentration of coarse particles of unmeltable material, leads to an increase in the presence of these particles in the glass produced in the furnace, thus causing increased rejection and chemical non-homogeneity which reduces the mechanical strength of the containers produced.

This problem has now become even more pressing because the constant increase in fuel prices, together with the need to reduce losses of the furnace mixtures and the consequent greenhouse gas (CO₂) emissions in order to meet the requirements of the "Kyoto Protocol", have led to further increases in the proportion of cullet used.

The difficulties encountered up to the present time in overcoming the aforementioned major quality problem are largely due to:
1) the presence in the "furnace ready" cullet of excessively large particles of non-glass materials (ceramic, porcelain, stone, etc.) which cannot be fully dissolved in the production of the glass in the melting furnace;
2) the contamination of the cullet, and particularly in the finest fractions, with highly reducing organic substances which react with the SO₃ during melting to generate SO₂. This dioxide forms a layer of heavy foam on the surface of the molten glass bath which impedes the transfer of the heat generated by the burners to the glass and causes difficulties in refining, with a consequent deterioration of the quality of the glass produced in the furnace.

The problem of the presence of non-glass materials in the "furnace ready" cullet is related to that of the optimal control of the optical machines installed in primary cullet selection and treatment plants, which detect the presence of opaque bodies in order to eliminate materials which are not dissolved in the production of glass, these machines providing for the rejection of these opaque bodies by diverting the contaminated flow. This operation makes it possible, on the one hand, to achieve a reasonable level of assurance that the "furnace ready" cullet passing through this operating stage of the primary plant does not contain the aforesaid harmful materials, or only contains marginal levels of them, but on the other hand it entails an increase in the rejected material, predominantly glass, which contains almost all the harmful materials present in the supply.

The object of the present invention is to overcome the problems of the known art described above, and in particular that of decreasing the rejection of materials for recycling, without having a negative effect on the quality of the materials which can be obtained by this recycling process.

The invention therefore proposes a method for producing artificial sand for the ceramic and glassmaking industry from a rejected fraction of the cullet obtained by the separated collection of glass, in which the said rejected fraction is separated from the cullet by automated separation based on optical transparency properties, having the characteristics defined in Claim 1.

As will be made clear in the following text, the method according to the invention permits the following:
- reduction to entirely marginal levels of the overall wastage resulting from the processing of cullet obtained by separated collection for environmental purposes (from 25% in the known art to less than 2%),
- increase in the percentage of cullet used for glassware production, without encountering quality problems,
- a significant reduction in the specific consumption of heat energy for glass production,
- a substantial contribution to greenhouse gas (CO₂) reduction for the hollow glassware and ceramic industry.

The rejected fraction of the cullet, which as mentioned above contains all the unmeltable materials present in the starting material and a very large proportion of organic compounds, is washed to remove most of the soluble substances. This washing can take place upstream of the optical separation of the rejected fraction from the cullet, in which case all the cullet is washed, including the fraction that will subsequently be rejected, or downstream of the optical separation, in which case only the rejected fraction is washed. In any case, the rejected fraction is subsequently ground in grinders adjusted for the specific type of supply in order to obtain a product that must not contain particles whose size exceeds 1.2 mm.

As the following detailed description will make clear, this product has been found to be surprisingly suitable as a raw material for the ceramic and glassmaking industry, even though it has been obtained from the rejected fraction of cullet.

The invention therefore also proposes an artificial sand for the ceramic and glassmaking industry, having the characteristics defined in Claim 9.

This sand is classified to obtain two products differing from each other solely in their particle size: a fraction with a particle size in the range from 0.08 to 1.2 mm, particularly suitable for the hollow glassware industry, and a fraction with a particle size of less than 0.08 mm, particularly suitable for the ceramic industry.

The invention therefore proposes a use of an artificial sand for the production of hollow glassware, having the characteristics defined in Claim 10, and a use of an artificial sand for the production of ceramic ware, having the characteristics defined in Claim 11.

For convenience, the aforesaid two fractions will be referred to henceforth as "Glassy Sand" and "Ceramic Sand" respectively. However, it is emphasized that this nomenclature relates to the use of these products, and not to their chemical composition.

The ranges of particle size shown above were determined in the development of a research programme aimed at resolving the problem of the reactivity of Glassy Sand in glass baths in melting tanks, and the resulting tendency to produce foam on the bath surface.

The ranges were mostly determined by considering the behaviour of Glassy Sand during glass melting, since this is unquestionably more critical than that of Ceramic Sand during the firing of ceramic ware.

This research has established that the range of particle sizes of Glassy Sand depends on the following factors:
- the content of organic substances in Glassy Sand,
- the residual water content,
- the minimum particle size as a function of the reactivity of the reducing substances which increases with an increase in specific surface, and therefore with the fineness of the Glassy Sand,
- the maximum size in relation to the requirement to achieve, during melting, the complete dissolution of the ceramic and other opaque materials which may be present.

It should be noted that it was essential to determine experimentally the optimal level of all the above parameters, obviously with consideration of their mutual action, in order to ensure that the use of the new Glassy Sand starting material (0.08 - 1.2 mm) obtained by the technology according to the invention makes it possible to achieve and maintain a high quality level of the glass produced by industrial hollow glassware furnaces.

It should also be emphasized that the choice of the optimal particle size of Glassy Sand was made with serious consideration of the fact that, although a particle size curve orientated towards larger sizes, but still within the range 0.08-1.2 mm, provides better control of the risk of foam formation, the presence of ceramic particles with a larger average size, even within the aforesaid range, can make it more difficult to achieve perfect melting and a high level of chemical homogeneity of the resulting glass.

Some preferred, but not exclusive, embodiments of the invention will now be described, with reference to the attached drawings, in which:
- Figure 1 is a flow chart of a first preferred embodiment of the method according to the present invention; and
- Figure 2 is a flow chart of a second preferred embodiment of the method according to the present invention.

The method according to the invention uses as its starting material the cullet obtained from separated collection of solid urban waste, or alternatively a specific rejected fraction of this cullet.

The term "urban waste" denotes, for the purposes of the current regulations in this field, the waste produced in the home, in offices, in public places and in business activities, while it excludes process slag from industrial activities.

The separated collection of waste is defined, for the purposes of the current regulations in this field, as "a collection procedure which groups urban waste into uniform categories of goods". In separated collection, it is possible to bring certain objects containing glass, such as bottles, jars and the like together, according to the "glass" category of goods. As is known, the material collected by separated glass collection is not entirely composed of glass, but contains impurities in the form of other materials, such as plastics, metallic materials, ceramics, stone materials, and others.

As mentioned above, this collected material (also referred to below as "cullet") is sent to glass recycling plants (also referred to below as "primary plants"), in which the cullet is subjected to various separation processes so as to remove as much of the metallic and plastics materials from the glass as possible.

For the purposes of the present invention, the term "cullet obtained from separated glass collection" denotes precisely the collected material which has been subjected to the processes for separating the metallic and plastics materials. This cullet still contains impurities, particularly ceramic and stone materials. For guidance, the average composition of this cullet is as follows:
glass, 94-97%; plastics materials and paper, 2-3%; ferrous materials, 0.3-0.5%; non-ferrous materials, 0.3-0.5%; ceramic and stone, 1-1.5%. The composition varies between cities and with the seasons.

As mentioned above, cullet is conventionally subjected in the primary plants to a further process of automated separation, which uses optical machines to separate the opaque bodies, such as stone and ceramic materials or glass contaminated with paper or the like, from the rest of the glass, based on the optical transparency properties of the materials. Additionally, in these machines it is impossible to avoid the classification of a fraction of the transparent glass in the non-transparent fraction.

The term "furnace ready cullet" typically denotes the fraction of cullet which is classified as transparent by these optical machines and therefore is composed exclusively of glass. For the purposes of the present invention, the term "rejected fraction of cullet" denotes the rejected fraction of glass which is classified as non-transparent by the optical machines. For guidance, the average composition of this rejected fraction of cullet is as follows: glass, 92-95%; plastics and paper, 1.0-1.50; ferrous material, 0.1% max.; non-ferrous material, 0.1% max.; ceramic and stone, 3-5%.

The method according to the invention can be used to produce artificial sand for the ceramic and glassmaking industry from the rejected fraction of cullet obtained from the separated collection of solid urban waste.

This method essentially comprises a stage of washing with water, a grinding stage and a screening stage. To obtain the aforementioned two new raw materials, namely Glassy Sand and Ceramic Sand, there is a further classification of the material produced in the grinding stage.

Washing with water, which is one of the key elements in the process because it imparts one of the essential characteristics of Glassy Sand and Ceramic Sand, namely the reduction of the organic substances present, can be carried out on all the cullet obtained by separated collection, after preselection to remove packaging materials of other kinds (paper, plastics, aluminium, tinplate, etc.) which may be present, or solely on the material rejected by the primary plant.

By comparison with the second solution, the first solution yields the following important benefits:
- the removal of the organic substances can be carried out with a substantially lower ratio of water to material (4/1 instead of 10/1), because of the higher specific surface of the material subjected to washing (much larger particle size),
- by obtaining, downstream the washing, glass in a particle size (greater than 10 mm) which is much more transparent than the raw glass, it is possible to reduce the amount of rejected glass material with the same sensitivity of the optical machines for selecting and rejecting opaque bodies (since there is less glass acting as opaque material because of the presence of labels), and consequently the amount of material to be sent to the grinding and selection plant for the recovery of the two new raw materials can be optimized,
- by providing glass in large particle sizes (more than 10 mm) which is transparent and completely free from opaque bodies, it is possible to separate in a very efficient way the colours of glass present in the material obtained by separated collection. Actually, since the only "furnace ready" glass available in some countries, such as Italy, is composed of a mixture of all colours (mixed glass), it can only be used for producing green glass, and amber glass to a certain extent, which greatly reduces the recycling capacity;
- this washing can be carried out with either cold or hot water. Operation with hot water, where it is possible to use sources of recoverable heat, not only provides further significant reductions of the water/cullet ratio with the same content of organic substances in the washed material, or, alternatively, important improvements in the quality of the washed material with an equal value of the aforesaid ratio, but also offers the considerable benefit of using process water at a temperature which is ideal, in both summer and winter, for promoting biological conversion in the organic material, which can therefore be used as an agricultural fertilizer.

The grinding of the rejected material from the primary stages of the treatment of glass obtained by separated collection is also essential for the purposes of the process according to the invention, and can be carried out by either a wet or a dry process, using conventional pebble mills in the first case, or high-compression roll mills of suitable size in the second case.

The downstream stages of the process are adapted appropriately, according to the type of mill to be used.

In the first case, the washing water is separated after grinding and hydraulic classification which leads to the production of the Glassy Sand and Ceramic Sand.

In the second case, the washed rejected material is dried by any recovered heat flows which may be available, or, when the plant is a large one (producing an overall total of about 300,000 metric tons per year of "furnace ready" cullet, Glassy Sand and Ceramic Sand), the plastics materials present in the rejected material can be used to produce a "diesel oil" (by a known method developed by Kouei Industries) which is very similar to that obtained from natural crude petroleum, a small part of which can be used to generate the heat required for drying.

Both of these solutions can be used either when the washing is carried out on all the cullet obtained by separated collection or when it is applied only to the rejected material from the primary plants for the production of "furnace ready" mixed cullet.

It should be noted that dry grinding is carried out with machines (high-compression mills) characterized by high efficiency and low energy consumption, which, by comparison with wet grinding, yield electricity savings in excess of the consumption of heat energy required to dry the washed rejected material, and it is therefore also convenient in cases where no recoverable heat flows are available and where it is impossible to produce "diesel oil" by controlled thermal degradation in the absence of air from the plastics materials present in the materials to be treated

As mentioned above, the two new raw materials (Glassy Sand and Ceramic Sand) are obtained from the ground material, in which the absence of particles with a diameter exceeding 1.2 mm (except for negligible fractions) must be ensured by particle sizing which yields, on one hand, a fraction with a diameter in the range from 0.08 to 1.2 mm (Glassy Sand) and, on the other hand, a glass powder containing all the material with a diameter of less than 0.08 mm (Ceramic Sand).

This separation can be carried out by means of different technologies, depending on whether the material is obtained by wet or dry grinding.

In either case, the classification must initially separate in a quantitative way all the material with a particle size of more than 1.2 mm, which is recycled for further grinding.

This operation is preferably carried out, in both cases, by using metal screens with an aperture of suitable dimensions.

The material with a diameter of less than 1.2 mm obtained by wet grinding is separated into the two desired fractions by means of a hydraulic classification process, while the material obtained by dry grinding is sent to a wind separator which achieves the same result by using the principle that, when operating in suitable conditions, the finer product is removed by the air while the coarser product (over 0.08 mm) falls to the base of the equipment.

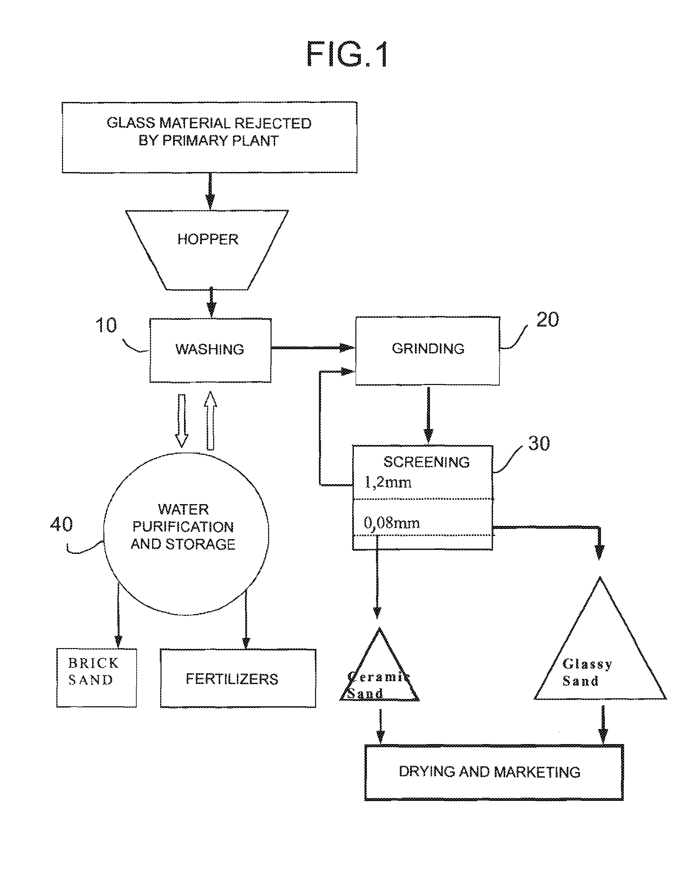

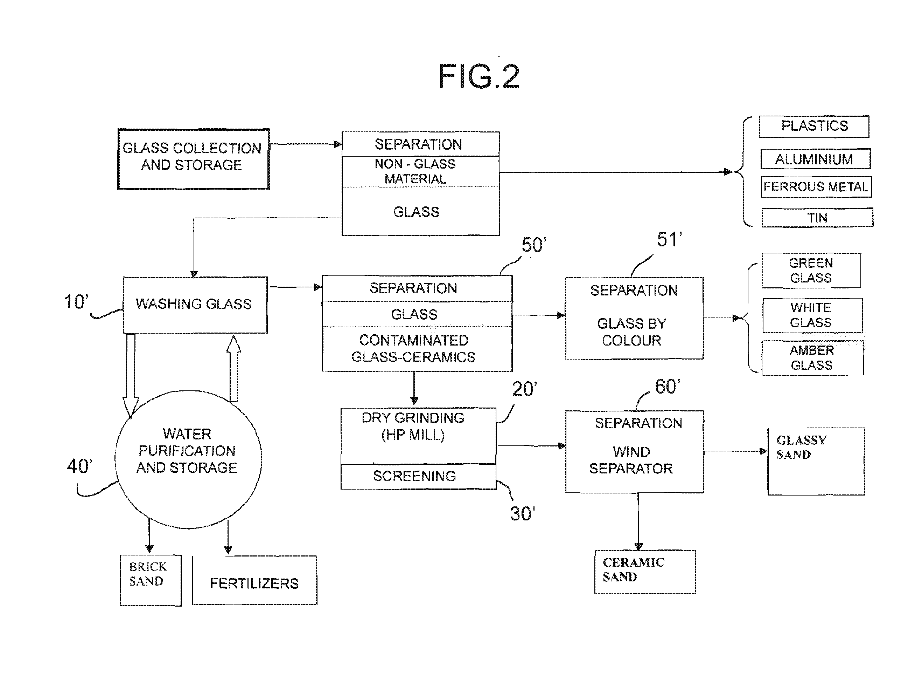

Two flow charts, shown in Figures 1 and 2, relating to the two arrangements of the process which have already been tested for producing the two new raw materials, are described below solely by way of example and without restrictive intent.

These materials, which have been subjected to long-term trials in the aforementioned two industrial sectors (Glassy Sand in the hollow glassware industry and Ceramic Sand in the ceramics industry), have yielded surprisingly favourable results.

Figure 1 shows a flow chart which relates to the case in which the primary plant for producing "furnace ready" cullet operates with the glass obtained by separated collection as is, in other words without washing.

In this flow chart, the numerals 10, 20 and 30 indicate, respectively, the stages of washing with water, grinding and screening. The numeral 40 indicates a stage of purifying the washing water.

The washing 10 is carried out on the predominantly glass material rejected by the primary plant, which is subsequently treated to produce Glassy Sand and Ceramic Sand.

The illustrated process can reduce the non-recyclable material to entirely marginal levels (2% maximum). Indeed, about 70% of the cullet obtained by separated collection typically leaves the plant in "furnace ready" pieces. The remaining 30%, in other words the rejected fraction, is used according to the invention to produce Glassy Sand and Ceramic Sand. About 21% of this rejected fraction is processed into Glassy Sand and about 7% is processed into Ceramic Sand (these percentages are percentages by weight with respect to the total quantity of cullet obtained by separated collection).

The water used, in a ratio of 10/1 to the glass material, travels with the material through the stages of washing 10, grinding 20 in a pebble mill and hydraulic classification 30.

As mentioned above, the process includes a section 40 for purifying the water. This water is initially sent to a chemical-physical decantation stage, which separates a small quantity (about 1% of the incoming material) of very fine glass (brick sand), which is impure because of the presence of organic substances and can be used either by the brickmaking or the cement industry, and is then sent to a biological treatment stage which produces a suspension of organic material (0.7% of the incoming material) which can be used as a fertilizer.

The water leaving the purification plant is fully recycled for washing 10 after topping up to replace the small quantities lost (by evaporation and as residual moisture in the two new raw materials and in the by-products).

In normal operating conditions, the content of total organic substances of the water entering the washing plant, expressed in terms of COD (Chemical Oxygen Demand, measured in mg/l according to the official IRSA-CNR method no. 5130) is less than 300, while the water leaving the plant has a COD level exceeding the entry level by an amount depending on the COD of the glass material subjected to washing. This makes it possible to produce Glassy Sand with a COD of approximately 300, which is sufficient to control the redox reactions in the melting furnace for glass production.

Glassy Sand has the average chemical composition of glass for the production of containers although its particle size distribution curve completely matches that of silica sands. It also has a low content of total organic substances, which, is stated above, makes it easy to control the redox reactions which, to repeat, are much more active when fine cullet is used than when coarser cullet is used.

These characteristics make it possible to obtain the benefits stated above, and also to produce glass which is free of inclusions of ceramic and other unmeltable substances, and which has levels of chemical homogeneity much greater than those achieved in the absence of Glassy Sand.

All these advantages not only help to increase the production per unit area (metric tons/m2) of melting furnaces, but also provide a way of reducing the weight of glass containers while maintaining the same mechanical strength.

Ceramic Sand also has the average chemical composition of glass for the production of containers. The greater benefit of its use in the ceramic industry is the fact that it contributes alkaline oxides (Na₂O and K₂O) at a substantially lower cost than that of the natural minerals used in ceramic mixtures for the same purpose.

Figure 2 shows a flow chart relating to the case in which all the glass is washed upstream of the primary plant for producing "furnace ready" cullet.

In this flow chart, the numerals 10', 20' and 30' indicate, respectively, the stages of washing with water, grinding and screening. The numeral 40' indicates a stage of purifying the washing water.

Since the washing 10' is carried out upstream of the separation 50' of the "furnace ready" cullet from the rejected fraction, the process can include electronic equipment for the separation 51' of glass of different colours.

The predominantly glassy rejected material is first dried, then dry ground (stage 20') in a high-compression mill, and then screened (stage 30') to separate the material with a particle size of more than 1.2 mm, and is finally sent to a wind separator (stage 60') which produces the two new raw materials (Glassy Sand and Ceramic Sand).

The flow chart of Figure 2 clearly shows not only the advantages described in the comments on the flow chart of Figure 1, but also the following additional benefits:
- in this case also, the output of "furnace ready" cullet is about 70% of the incoming glass obtained from separated collection, but it is divided into three colours (green, half white and amber). This offers considerable benefits to the hollow glassware industry, which can only access cullet of mixed colour at present, and can use this only for the production of green glass, and, to a very limited extent, amber glass. The possibility of making all three basic colours available will therefore increase the percentage of use and offer further reductions in energy consumption and greenhouse gas emissions (because of the lower firing losses of the fired mixtures and the lower specific energy consumption),
- in the numerous tests that were conducted, the content of unmeltable materials was found to be less than 5 parts per million for all three colours, in other words 10 times less than the average for the "furnace ready" mixed cullet used at present,
- the outputs of the two new raw materials (Glassy Sand and Ceramic Sand) are very similar to those obtained by operation according to the diagram of Figure 1. It should be noted, in this connection, that Glassy Sand can be used only in mixtures for producing green and amber glass, since all the rejected material from the primary plant supplying the recovery section is rejected upstream of the colour separation,
- the washing of the glass, carried out on the coarse cullet, requires a lower water/glass ratio (4/1) because the area to be treated is substantially smaller. The flow of water required is more or less the same, in spite of the considerably larger quantity of glass to be washed (3 - 4 times greater),
- the purification plant for the washing water operates with the same stages as those described in the comments on the flow chart of Figure 1. The water supplied to it has not been in contact with the ground material, and therefore contains a substantially smaller quantity of fine glass (0.2-0.3% of the incoming material). The content of organic substances in the water is therefore higher, since the same quantity of water has been in contact with a quantity of glass which is 3-4 times greater. This difference naturally leads to a higher output of suspended organic substances to be used as fertilizer (1.4% of the incoming material),
- the surprisingly favourable characteristics of the two new raw materials, particularly the Glassy Sand, are very similar to those already mentioned in the comments on the flow chart of Figure 1, and therefore the benefits arising from their use are the same.

Table 1 below shows the ranges of particle size, chemical characteristics (compositions in terms of inorganic oxides) and content of organic substances in the two new raw materials proposed by the present invention.

**Table 1**

| Characteristics | Glassy Sand | Ceramic Sand |
|---|---|---|
| Particle size characteristics | | |
| < 0.08 mm % | 5 max | 95 min |
| 0.08 < # < 1.20 mm % | 95 min | 5 max |
| > 1.20 mm % | 0 | 0 |
| Others % | | |
| Content of organic substances | | |
| H₂O soluble COD | 50 - 250 | N.D. |

### Example 1

In a plant with a production capacity of 35 metric tons/hour, characterized by the following processing stages:
- Washing with water,
- Wet grinding,
- Wet screening to separate the coarse material to be recycled to the mill,
- Hydraulic classification of the resulting fine product,
- Treatment of the washing water,
a test was conducted over a period of 24 hours, using a supply of 840 metric tons of rejected material from a primary plant for producing "furnace ready" cullet, having the following average characteristics:
- Particle size of the material: < 50 mm
- Content of unmeltable material (ceramics): 3%
- Content of total organic substances (COD): 1000

The flow rate of washing water, which was also used for carrying the ground material to the subsequent stages of wet screening and hydraulic classification, was 350 m³/hour (water/material ratio = 10) at an average temperature of 12°C.

The content of organic substances in the incoming washing water, expressed in terms of COD, was 200, while at the outflow it was 600.

The following products were obtained:
- 590 metric tons (70.25% of the incoming material) of Glassy Sand, 100% of which was within the specified particle size range (0.08 - 1.0 mm), characterized by a content of total organic substances corresponding to a COD of 100,
- 235 metric tons (28.00% of the incoming material) of Ceramic Sand, 100% of which was below 0.08 mm,
- 13 metric tons (1.50%) of a predominantly inorganic material, decanted in the first stage of purification of the washing water, consisting of very fine glass powder and organic substances,
- 2 metric tons (0.25%) of an aqueous suspension of organic substances produced in the biological section of the washing water treatment cycle.

The collected materials were used as follows:
1. All the Glassy Sand was used, in a proportion of 20% of the tapped glass, to replace raw materials in a furnace for hollow glass production operating at 250 metric tons per day in a trial which continued for about 12 days. The observations on the quality of the glass produced, recorded from the 6th to the 12th day, after a sufficient number of changes of the glass in the tank, revealed the following:
   - A surprising improvement in chemical homogeneity and colour.
   - On the other hand, since neither the quantity nor the quality of the "furnace ready" cullet had been changed, no significant changes were observed in the number of inclusions of unmolten material per metric ton of tapped glass. This fact, in combination with an increase of 0.20% in the Al₂O₃ content of the tapped glass due to the dissolved ceramic substance, clearly confirms that the ceramic substances present in the rejected material (3%) reduced to a particle size of less than 1.2 mm is fully dissolved in the production of the glass.
   - The foam on the glass bath in the furnace, which, with the same content of organic substances in the cullet, becomes more highly developed as the specific surface of the cullet increases, showed no changes detectable by the naked eye.
   - The expected benefits in terms of the reduction of specific energy consumption and the reduction of greenhouse gas emissions were also obtained.
2. All the Ceramic Sand was used as an alkali-releasing agent in the production of various types of ceramics. All the expected benefits were obtained in this case also.
3. Exploratory tests of the use in the cement and brickmaking industries of the suspension of predominantly inorganic material (12 metric tons) separated from the washing water are in progress in the Applicant's laboratory, and have shown favourable and very promising results.

### Example 2

Using the same plant and the same rejected material as described in Example 1, a second test was conducted at the same rate (35 metric tons/hour) and for the same effective period, using washing water which had previously been heated to a temperature of 40°C and cooled to 20°C upstream of the purification treatments.

The flow rate of washing water, which was also used for carrying the ground material to the subsequent stages of wet screening and hydraulic classification, was reduced from 350 m³/hour (water/material ratio = 10) to 250 m³/hour (water/material ratio = 7).

It should be noted that a further reduction in the flow rate of washing water was not possible, because a considerable part of the water acts as a carrier for the material both upstream and downstream of the grinding.

The content of total organic substances in the incoming washing water, expressed in terms of COD, was 200, while at the outflow it was 800.

The result, in terms of the quantities of the different fractions, was entirely equivalent to the result of Example 1.

However, in the practical test of Glassy Sand, conducted in the conditions described above with reference to Example 1, the following advantages were seen, in addition to the aforementioned advantage of a reduction in the water/material ratio:
- A reduction of the content of total organic substances in Glassy Sand, expressed in terms of COD , from 100 to 50.
- A reduction of the foam on the surface of the bath during the melting of the glass.
- An improvement in the refining of the glass (reduction of the number of bubbles per unit of weight).
- A slight improvement in the specific energy consumption of the furnace when all the other conditions are kept constant.
- An increase in the Al₂O₃ content of the glass, by the same amount as seen in Example 1 (0.2%).

### Example 3

In a plant having the following sections:
- Washing with water all the cullet obtained by separated collection,
- Drying the washed material,
- Selection and rejection of unmeltable opaque materials, using high levels of sensitivity of the electronic machines,
- Separation of the mixed glass into the three fundamental colours: Green, Half white and Amber,
- Dry grinding of all the rejected material in a high-compression mill,
- Dry screening to separate the coarse material to be recycled to the mill,
- Classification of the resulting fine material in the wind separator,
- Treatment of the washing water,
approximately 1000 metric tons of mixed cullet, previously separated from all the packaging materials (paper, plastic, aluminium, tinplate, etc.) were treated.

It should be noted that the following stages:
- Washing of all the cullet,
- Selection and rejection of unmeltable opaque materials, using high levels of sensitivity of the electronic machines,
- Separation of the mixed glass into the three fundamental colours: Green, Half white and Amber, were carried out with equipment having an output of about 5 metric tons/hour, while the following stages:
- Drying the previously washed rejected material,
- Dry grinding of all the rejected material in a high-compression mill,
- Dry screening to separate the coarse material to be recycled to the mill,
- Classification of the resulting fine material in the wind separator,
- Treatment of the washing water
were carried out at a rate of 20 metric tons per hour.

It follows that, the processing of the cullet obtained by separated collection for environmental purposes was carried out initially for about 200 hours, while the cullet resulting from the treatment of the rejected material accumulated in the preceding period was processed subsequently for about 15 hours.

The flow rate of the washing water, which in this case had no transport function, was set to 20 m³/hour (water/material ratio = 4) at a mean temperature of 40°C and was cooled to 20°C upstream of the purification treatment.

The content of total organic substances in the incoming washing water, expressed in terms of COD, was 200, while at the outflow it was 900.

The following products were obtained:
- 700 metric tons (70.00% of the processed material) of furnace ready washed cullet, composed of:
   453 metric tons of green glass,
   141 metric tons of half-white glass, and
   106 metric tons of amber glass.

In all three types of cullet, the content of unmeltable opaque materials was found to be less than 5 parts per million, and therefore 10 times less than the average value found in mixed cullet.
- 210 metric tons (21.00% of the processed material) of Glassy Sand from mixed glass, 100% of which was within the specified particle size range (0.08 - 1.0 mm), characterized by a content of total organic substances corresponding to a COD of less than 50.
- 84 metric tons (8.40% of the processed material) of Ceramic Sand, 100% of which was below 0.08 mm.
- 5 metric tons (0.50%) of a predominantly inorganic material, decanted in the first stage of purification of the washing water, consisting of very fine glass powder and organic substances.
- 1 metric ton (0.10%) of an aqueous suspension of organic substances produced in the biological section of the washing water treatment cycle.

The collected materials were used as follows:
1. All the washed green "furnace ready" cullet was used, in a proportion of 40% of the tapped glass, to replace mixed glass in the mixture which was supplied to the industrial furnace used previously for the practical tests of Glassy Sand, this mixture being produced in the conditions of Examples 1 and 2 (at a rate of 250 metric tons per day).
2. All the Glassy Sand was used in a proportion of 20% of the tapped glass, replacing a corresponding quantity of mixed cullet. The duration of the test, which was limited by the availability of green "furnace ready" cullet and Glassy Sand, was 4.5 days (approximately 110 hours), a sufficient time for 5 changes of all the glass present in the melting bath, and thus for an objective evaluation of the advantages yielded by the use of the new raw material and the green "furnace ready" cullet characterized by a content of unmeltable substances 10 times lower than that of the mixed cullet normally used at present (5 parts per million, instead of 50). The observations of the quality of the glass produced, recorded from the 3rd day onwards (after 3 changes of the glass present in the tank) showed the following surprising improvements:
   - In the number of inclusions of unmolten material per metric ton of glass, which decreased from 25 to 2 and then increased again slowly towards the initial value at the conclusion of the test, when the initial mixture was again supplied.
   - In the chemical homogeneity and the colour.
   - In the formation of foam on the surface of the bath, which, in spite of the presence of Glassy Sand with a particle size in the range from 0.08 to 1.2 mm in a proportion of 20% of the tapped glass, disappeared almost entirely.
   - In the quality of the glass (fewer bubbles per unit of weight).
   - In the quality of the bottles (increased resistance to all thermal and mechanical stresses), due to the negligible number of inclusions of unmolten material and the greater chemical homogeneity.
   The expected benefits in terms of the reduction of specific energy consumption and the reduction of greenhouse gas emissions were also obtained.
3. All the Ceramic Sand was used as an alkali-releasing agent in the production of various types of ceramics.

## Claims

1. Method for producing artificial sand for the glassmaking and ceramic industry from a rejected fraction of the cullet obtained by the separated collection of glass, in which the said rejected fraction is separated from the cullet by automated separation (50') based on optical transparency properties, the said method comprising the following stages:
- subjecting one of the said cullet and rejected fraction of the cullet to washing with water (10'; 10), respectively upstream or downstream of the said automated separation based on optical transparency properties,
- subjecting the said rejected fraction of the cullet treated in this way to grinding (20' ; 20), in such a way as to produce a ground product, and
- subjecting the said ground product to screening (30'; 30), in such a way as to separate a fine fraction of the ground product having a particle size of less than 1.2 mm,
the said artificial sand being composed of the said fine fraction of the ground product.

2. Method according to Claim 1, in which waste water is produced in the said stage of washing with water, the said waste water being subjected to purification (40'; 40) and at least partially reused in the said stage of washing with water.

3. Method according to Claim 2, in which predominantly inorganic material, which can be used as an additive in the cement and brickmaking industry, is separated from the said waste water in the said purification stage.

4. Method according to Claim 2 or 3, in which an aqueous suspension containing organic substances which can be used as agricultural fertilizers is separated from the said waste water in the said purification stage.

5. Method according to any one of the preceding claims, in which a coarse fraction of the ground product having a particle size of more than 1.2 mm is obtained in the said screening stage, the said coarse fraction being subjected again to the said screening stage.

6. Method according to any one of the preceding claims, in which the said washing stage (10) is carried out downstream of the said automated separation based on optical transparency properties, and the said grinding (20) and screening (30) stages are carried out by a wet method.

7. Method according to any one of Claims 1 to 5, in which the said grinding stage (20'; 20) is carried out by a dry method in a high-compression mill, following the drying of the said rejected fraction of the washed cullet.

8. Method according to Claim 7, in which the said washing stage (10') is carried out upstream of the said automated separation (50') based on optical transparency properties, the said method also comprising a separation stage (51') for separating furnace ready cullet obtained by automated separation (50') based on optical transparency properties, according to the three fundamental colours of green, half white and amber.

9. Artificial sand for the glassmaking and ceramic industry, **characterized in that** it is produced by the treatment of a rejected fraction of the cullet obtained by the separated collection of glass, in which the said rejected fraction is separated from the cullet by automated separation based on optical transparency properties, the said treatment comprising the following stages:
- subjecting one of the said cullet and rejected fraction of the cullet to washing with water, respectively upstream or downstream of the said automated separation based on optical transparency properties,
- subjecting the said rejected fraction of the cullet treated in this way to grinding, in such a way as to produce a ground product, and
- subjecting the said ground product to screening, in such a way as to separate a fine fraction of the ground product having a particle size of less than 1.2 mm,
the said artificial sand being composed of the said fine fraction of the ground product.

10. Use of a sand according to Claim 9 for the production of hollow glassware, in which the said sand has a particle size in the range from 0.08 mm to 1.20 mm.

11. Use of a sand according to Claim 9 for the production of ceramic articles, in which the said sand has a particle size of less than 0.08 mm.
